# EUROPEAN PATENT SPECIFICATION

(11) **EP 3 913 336 B1**
(45) Date of publication and mention of the grant of the patent: **10.04.2024**
(21) Application number: 21174503.9
(22) Date of filing: 18.05.2021
(51) Int. Cl.: G01F 23/292, G01S 17/88

(54) **ELECTRONIC DEVICE FOR MEASURING THE FILLING LEVEL OF A CONTAINER, PARTICULARLY FOR PUBLIC REFUSE CONTAINERS AND PUBLIC LITTER BINS**
ELEKTRONISCHE VORRICHTUNG ZUR FÜLLSTANDSMESSUNG EINES BEHÄLTERS, INSBESONDERE FÜR ÖFFENTLICHE MÜLLBEHÄLTER UND ÖFFENTLICHE ABFALLBEHÄLTER
DISPOSITIF ÉLECTRONIQUE POUR MESURER LE NIVEAU DE REMPLISSAGE D'UN CONTENEUR, NOTAMMENT POUR LES POUBELLES PUBLIQUES ET LES BACS À ORDURES PUBLICS

(30) Priority: 21.05.2020 IT 202000011863
(43) Date of publication of application: 24.11.2021
(73) Proprietor: Adgenera Srl, 10135 Torino (IT)
(72) Inventor: FURANTI, Massimo, 46040 Monzambano MN (IT); CASAZZA, Roberto, 10128 Torino (IT); FONTANA, Fabrizio, 13043 Cigliano VC (IT); GIMONDO, Massimiliano, 10135 Torino (IT)
(74) Representative: Modiano, Micaela Nadia

(56) References cited:
- WO-A2-2017/149476
- CN-U- 209 181 878
- US-A- 4 286 464
- US-A1- 2002 194 911
- US-A1- 2014 264 098
- US-A1- 2015 362 355
- US-A1- 2016 180 690
- US-B1- 9 068 875

## Description

The present invention relates to an electronic device for measuring the filling level of a container, particularly for public refuse containers and public litter bins.

It is known to fit public refuse containers with sensors for measuring the filling level of the container. The data read can be sent to a control center for the purposes of monitoring and planning, typically on a priority basis, the trips of the vehicles adapted to empty the containers.

Conventional measuring systems are based mainly on ultrasound sensors, and in some cases they use pre-assembled modules available on the market.

However, as is well known to the person skilled in the art, measuring systems based on ultrasound sensors have some drawbacks.

In particular, for correct operation, the active/sensitive parts of the ultrasound sensors must be directly exposed to the area to be monitored, without screening or barriers, with consequent risk of damage or of contamination.

Another drawback of the known measuring systems based on ultrasound sensors is that, when they have an onboard power supply, they have a relatively low autonomy owing to the high energy consumption of this type of sensor.

Another drawback of the known energy systems based on ultrasound sensors is that the measuring of the filling level is rather unreliable, not least owing to the fact that containers fill up in a non-uniform manner and this fact can skew the reading. In fact, as is known, ultrasound sensors are not capable of discriminating between the position of objects inside the monitored field, and are easily prone to spurious readings caused by isolated obstacles of irregular shape, which do not reflect the actual filling level of the container.

In more general terms, as is known, measuring systems based on ultrasound sensors have the drawback of being extremely sensitive both to the type of object to be detected, and to the type of container in which they are installed.

A further drawback of the known measuring systems based on ultrasound sensors is that they are relatively expensive to make.

Furthermore, the known measuring systems either do not allow the sensors to be oriented or, in order to orient them, they make use of technical solutions that are relatively complex and/or fragile and/or expensive, with movable elements and/or multiplication of the number of sensors.

Last but not least, the known measuring systems are relatively cumbersome, especially because of the space taken up by the batteries, where present. This fact not only limits the effective capacity of the container, but also increases the risk of the sensors coming into contact with the material inside the container and being damaged or contaminated by it.

CN209181878U relates to smart garbage bin monitoring system, wherein infra-red light emitter and receiver are placed on a printed circuit board, which is however not protected.

WO2017/149476A2 discloses both a level sensor and a concentration sensor, wherein the concentration sensor is placed on a printed circuit board pressed against a transparent wall and spaced apart from the transparent wall via an insert.

The aim of the present invention is to provide an electronic device for measuring the filling level of a container, particularly for public refuse containers and public litter bins, that is more reliable and more precise in measuring than the known systems, including in the event of the possible uneven filling of the container, and which has a negligible sensitivity both to the type of object to be detected, and to the type of container in which they are installed.

Within this aim, an object of the invention is to provide an electronic device that, although carrying out measurements that are reliable and precise, offers adequate protection for the sensors from the risk of damage or of contamination by the material in the container.

A further object of the invention is to provide an electronic device with compact dimensions, so as not to compromise the capacity of the container and limit the risk of contact with the material inside it.

Another object of the invention is to provide an electronic device that has reduced energy consumption, so as to offer a high autonomy, and which is relatively of low cost.

This aim and these and other objects, which will become clearer from the description that follows, are achieved by an electronic device having the characteristics recited in the appended claim 1, while the dependent claims define other characteristics of the invention which are advantageous, although secondary.

Now the invention will be described in detail, with reference to some preferred, but not exclusive, embodiments thereof, which are illustrated for the purposes of non-limiting example in the accompanying drawings, wherein:
- Figure 1 is an assembled perspective view of the device according to the invention;
- Figure 2 is an exploded perspective view of the device of Figure 1;
- Figure 3 is an axial cross-sectional view of the device of Figure 1;
- Figure 4 is an axial cross-sectional view that schematically illustrates a bell-shaped container for the collection of glass with an electronic device according to the invention installed inside it.

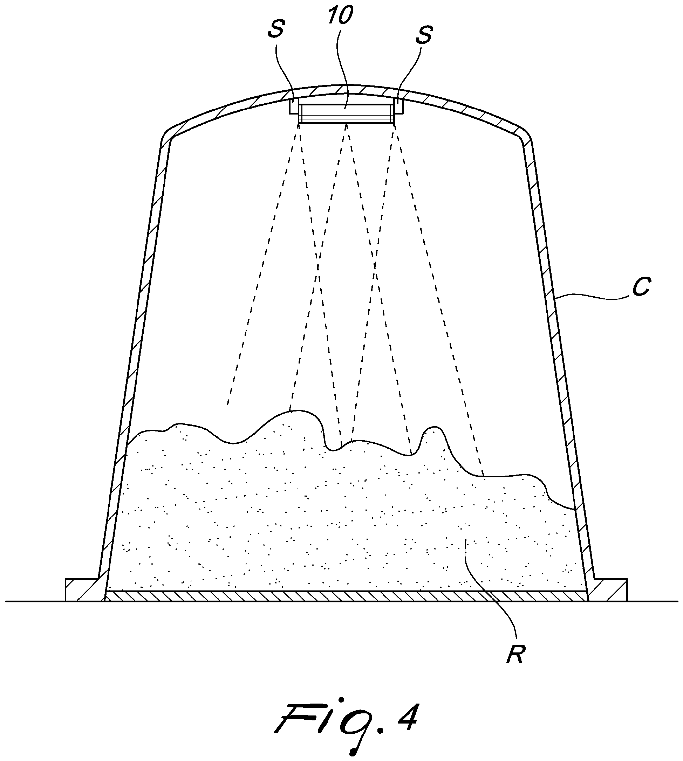

With reference to the figures, an electronic device 10 is adapted to be mounted inside a generic container, which in the example of Figure 4 is a bell-shaped container C for the collection of glass, for the purpose of measuring the filling level of that container.

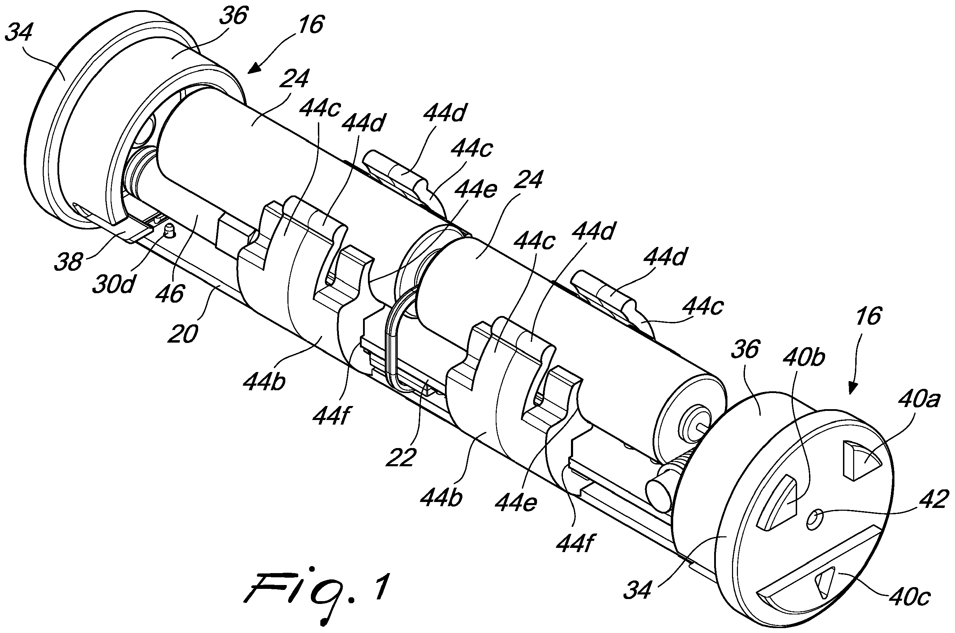

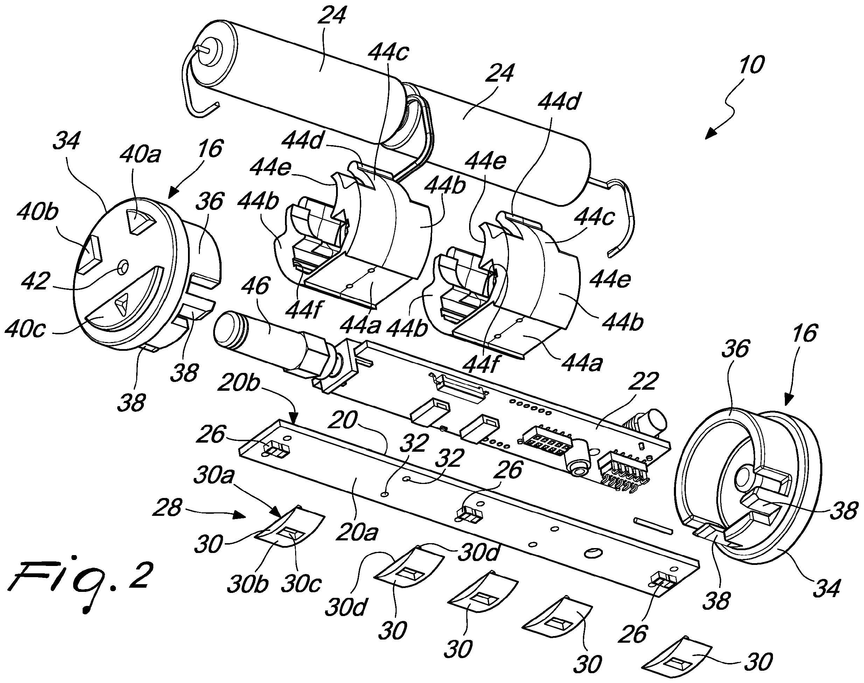

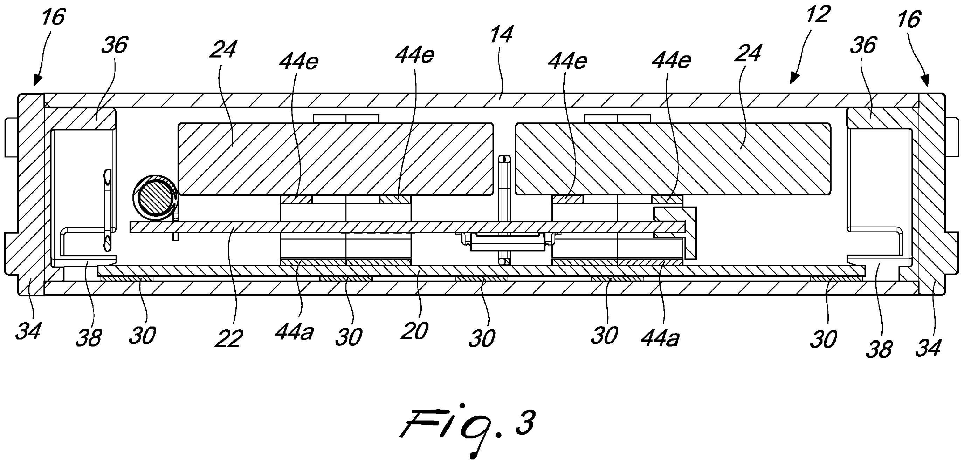

With particular reference to Figures 1-3, the device 10 is enclosed in a shell 12 which comprises a thin, wall-mounted tubular body 14 made of transparent material (illustrated only in Figure 3), preferably a plastic material like polycarbonate, which is closed at its opposite ends by two identical covers 16 molded from plastic material.

Advantageously, the two covers 16 are welded to the tubular body 14 using ultrasound, in order to increase the mechanical strength of the shell and ensure the seal against possible infiltrations of fluids or humidity. This characteristic is particularly advantageous in consideration of the fact that containers and bins for refuse are normally located outdoors and therefore are exposed to the elements and to adverse atmospheric and environmental conditions.

The shell 12 houses:
- a first circuit board 20 which is provided with infrared sensor means (described in more detail below) which face the internal surface of the tubular body 14,
- a second circuit board 22 in a more inward position with respect to the first circuit board 20, which incorporates data transmission means for sending the data acquired by the sensor means to an external control station, e.g., a control center (not shown), and
- power supply means which, in this embodiment, comprise a pair of standard AA-format 3.6 volt batteries 24 arranged in parallel.

The tubular body 14 and the covers 16 advantageously have a substantially circular cross-sectional profile.

In this embodiment, the sensor means comprise a triad of infrared sensors 26 arranged in a row. The sensors 26 are welded onto a front surface 20a of the first circuit board 20 which faces the internal surface of the tubular body 14.

Advantageously, the infrared sensors 26 are of the multi-area type.

As is known, a sensor with multi-area functionality includes a lens that is capable of focusing the light beam within a region formed by an array of NxN points, e.g., 16x16 points. It is possible to choose a rectangular or square subset of the array on which to collimate the light beam, so as to enable a more focused and precise measurement for each area chosen.

In a way that is known per se, each one of the three sensors 26 comprises an emitter adapted to emit a light ray in the field of infrared, and a receiver adapted to receive the returning light ray by reflection on the object in front. The distance from the object is calculated on the basis of the length of time elapsed between the emission of the light ray and the reception thereof.

It has been found that, in order to prevent problems arising from partial or total reflections of the light ray on the internal surface of the tubular body 14, the sensors must be positioned as close as possible to that internal surface. Besides, it is necessary to prevent direct contact between the sensors 26 and the tubular body 14 in order to prevent any impacts against the shell 12 from having repercussions on the sensors with the attendant risk of damage.

To this end, the first circuit board 20 is elastically pushed toward the tubular body 14 by presser means anchored to the shell, with the interposition of spacer means 28 between the first circuit board 20 and the tubular body 14, which are calibrated to keep the sensors 26 at a preset distance from the tubular body 14, e.g., a distance of 0.1 mm.

In the embodiment described herein, the spacer means 28 comprise five mutually identical spacers 30. Each one of the spacers 30 has a flat face 30a adapted to abut against the front surface 20a of the first circuit board 20, and an opposite face 30b which is adapted to abut internally on the tubular body 14 and has an arc-like profile that is complementary thereto.

Furthermore, in this embodiment, the spacers 30 have a through hole 30c the dimensions of which are slightly larger than the footprint of the sensor 26. In this manner, three of the five spacers 30 are fitted without contact over the three sensors 26, while the two remaining spacers are arranged in intermediate positions between the sensors 26.

Each one of the spacers 30 is further provided with a pair of centering pins 30d which rise from its flat face 30a and are inserted into corresponding holes 32 provided in the first circuit board 20 for centering purposes.

Each one of the covers 16 comprises a disk-like bottom 34 and a tubular wall 36 which extends axially from the internal face of the disk-like bottom 34 and is contoured to be inserted into a corresponding end of the tubular body 14.

In this embodiment, the presser means comprise, for each one of the two covers 16, at least one elongated protrusion, preferably a pair of laterally adjacent elongated protrusions 38, which extend monolithically from the bottom 34 in a longitudinal direction toward the inside of the tubular body 14. In the zones of the elongated protrusions 38, the tubular wall 36 is interrupted in order to leave space for them.

The elongated protrusions 38 are arranged in a relationship of slight interference with the first circuit board 20 in order to engage it, while bending elastically, on the rear side 20b at a respective end and push it toward the tubular body 14.

Advantageously, the free ends of the elongated protrusions 38 are rounded in order to facilitate the insertion thereof behind the first circuit board 20.

On their external side, the disk-like bases 34 have contoured projections 40a, 40b, 40c and a hole 42 for arranging and fixing a bracket S (only shown schematically in Figure 4) for anchoring the device 10 to the internal wall of the container.

The presser means further comprise at least one support molded in plastic material which is housed in the tubular body 14, preferably a pair of supports 44 aligned with the two intermediate spacers. The supports 44 are contoured so as to bias the first circuit board 20 toward the internal surface of the tubular body 14 even in intermediate position.

Each one of the supports 44 is substantially C-shaped, with a flat base 44a which defines a seat adapted to engage the rear side 20b of the first circuit board 20, and two mirror-symmetrical curved arms 44b which have an external profile that is complementary to the internal surface of the tubular body 14.

The curved arms 44b have respective terminal portions 44c which are elastically flexible, which are provided at their free ends with respective teeth 44d which protrude outward. The terminal portions 44c of the curved arms 44b, by pressing elastically on the internal surface of the tubular body 14 via the teeth 44d, push the support 44 against the first circuit board 20 and the latter, in turn, against the tubular body 14 via the spacers 30.

Furthermore, the curved arms 44b have respective mutually opposite contoured seats 44e on their internal side. The curved seats 44e define a seat for a corresponding one of the two batteries 24, in particular, a cylindrical housing in this embodiment in which the two batteries 24 have a cylindrical profile.

The second circuit board 22 is supported between the arms 44b below the batteries 24. To this end, the curved arms 44b have respective mutually opposite longitudinal grooves 44f on their internal side, which are engaged by the mutually opposite longitudinal edges of the second circuit board 22.

In a preferred embodiment, the transmission means for sending the data to the external control station are wireless and, to this end, at one end of the second circuit board 22 an antenna 46 is detachably connected and is accommodated inside the shell 12. The removable connection makes it possible, alternatively, to associate the device with an antenna to be fixed externally to the container. In this manner, the device can be advantageously installed even in positions not covered by a signal, e.g., inside metal containers that form a Faraday cage.

Advantageously, the device 10 also has a temperature sensor (not shown) for accessory functions, for example, for sending an alarm signal if the temperature inside the container exceeds a preset threshold that is indicative of a possible fire.

In operation, the device 10 can be installed inside a generic container, e.g., a container for refuse, by way of brackets S fixed to the covers 16, as illustrated for the purposes of example in Figure 4 with reference to a bell-shaped container C for the collection of glass.

The precise positioning of the sensors 26 at a very short distance from the tubular body 14 makes it possible to avoid read errors deriving from partial or total reflections of the light ray on the internal surface of the tubular body 14. At the same time, the absence of contact between the sensors 26 and the tubular body 14 prevents any impacts against the shell from having repercussions on the sensors with the consequent risk of being damaged.

The programming of the device and the method of calculating the filling level lie outside the scope of the present invention and are part of the normal knowledge of the person skilled in the art. Therefore, these aspects will not be discussed in the present description.

In practice it has been found that the measuring device according to the invention fully achieves the set aims.

The use of multiple multi-area infrared sensors makes it possible to perform reliable and precise measurements of the filling level of the container.

In particular, this type of sensor makes it possible to perform localized measurements in different zones of the container and, on the basis of these, to perform an average calculation of the filling level, so as to minimize the risk of false readings determined by a single object of anomalous shape, which does not reflect the true contents of the container.

The system described for anchoring the first circuit board to the shell makes it possible to keep the sensors at a minimum distance from the tubular body, while avoiding direct contact. This fact makes it possible to prevent any read errors generated by the reflection of the light ray on the wall of the tubular body, and at the same time to prevent any impacts against the device from having repercussions on the sensors, risking damage.

The sealed shell protects the electronics of the device from liquids and humidity, ensuring that the device according to the invention does not require maintenance and can even be washed together with the container.

Another advantage of the measuring device according to the invention is that it does not require calibration operations during installation.

Furthermore, the measuring device according to the invention has a very contained space occupation, which moreover can be optimized as a function of the size of the container, so as not to compromise the effective capacity of the container and limit the risk of contact with the material inside it.

In addition, the reduced weight of the measuring device according to the invention renders it particularly resistant to mechanical stresses.

Moreover, the measuring device according to the invention has reduced energy consumption, so as to offer a high capacity and a low environmental impact in relation to the disposal of the exhausted batteries.

Last but not least, the relatively low manufacturing costs make the measuring device according to the invention compatible with a mass installation in public refuse containers and public litter bins.

A preferred embodiment of the invention has been described, but obviously the person skilled in the art may make various modifications and variations within the scope of protection of the claims.

In particular, as mentioned previously, the number of sensors and, as a consequence, the length of the electronic device can be optimized as a function of the specific application. For example, for litter bins of small dimensions a single sensor, or optionally two sensors, could be sufficient and, as a consequence, the device could be even more compact than described for the purposes of example in the present application. By contrast, for larger containers, the device can be provided with four, five or more sensors conveniently mutually spaced apart, in order to ensure a complete and reliable detection of the filling level in the various different zones of the container.

In addition, the measuring device according to the invention could have means for wired or wireless connection to other devices. For example, in this case, one of the measuring devices could operate as a master for the exchange of data with the control center, while the others could operate as slaves and, therefore, be limited to performing the measurements and transmitting the data detected to the device master.

Furthermore, in the example described herein there are two circuit boards which are separated and arranged on two different levels. However, it is evident that in an alternative embodiment the infrared sensor means and the data transmission means (if present) could be integrated in a single circuit board.

The mutual distance between the sensors can be chosen on the basis of the type of sensor used, so as to optimize the mapping of the filling level of the entire volume of the container. For the sensors used in this embodiment, it has been found that a distance of approximately 20 cm is optimal for ensuring a precise mapping.

Furthermore, although the cylindrical shape of the shell is preferable in terms of robustness and flexibility of positioning, the shell could have a different profile, e.g., a parallelepiped profile or a generally prismatic profile, and only one portion thereof on which the sensors face could be transparent.

As mentioned previously, the electronic device according to the invention can be advantageously used also in sectors other than that of refuse collection. For example, it could be applied in industry for controlling the filling level of tanks or of containers containing loose material, for various industrial processes.

Furthermore, instead of being powered by batteries, the measuring device according to the invention could have a connector in order to be powered by an external source.

Also, the exchange of data with the control center and/or with an operator terminal could be done using a wired connection instead of a wireless one, optionally using the same connector as the power supply.

This application claims priority from disclosures in Italian Patent Application No. 102020000011863.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An electronic device for measuring the filling level of a container, comprising:
- a shell (14, 16) adapted to be mounted inside a container (C) and having at least one transparent portion (14),
- a first circuit board (20) housed in the shell (14, 16) and provided with at least one infrared sensor (26) for measuring the filling level, which faces an internal surface of said transparent portion (14) and is provided with an emitter adapted to emit a light ray in the field of infrared, and a receiver adapted to receive the returning light ray by reflection on the object in front,
**characterized in that** it further comprises
- presser means (38) anchored to the shell and adapted to elastically push said first circuit board (20) toward said transparent portion (14), and
- spacer means (28, 30) interposed between said first circuit board (20) and said transparent portion (14) and calibrated to keep said at least one sensor (26) at a preset distance from said transparent portion (14) without contact.

2. The electronic device according to claim 1, **characterized in that** said spacer means (28) comprise at least one spacer (30) with a flat face (30a) adapted to abut against a front surface (20a) of said first circuit board (20), on which said at least one sensor (26) is mounted, and an opposite face (30b) which is adapted to abut internally on said transparent portion (14) and has a profile that is complementary thereto.

3. The electronic device according to claim 2, **characterized in that** said at least one spacer (30) is provided with a through hole (30c) the dimensions of which are slightly larger than the footprint of said at least one sensor (26) in order to be fitted thereon without coming into contact therewith.

4. The electronic device according to claim 2 or 3, **characterized in that** said at least one spacer (30) is provided with a pair of centering pins (30d) which rise from its flat face (30a) and are inserted into corresponding holes (32) provided in said first circuit board (20) for centering purposes.

5. The electronic device according to one of claims 1-4, **characterized in that** said transparent portion of the shell comprises a tubular body (14), which is closed at its two opposite ends by respective covers (16).

6. The electronic device according to claim 5, **characterized in that** said covers (16) are welded to said tubular body (14) by ultrasound.

7. The electronic device according to claim 5 or 6, **characterized in that** said presser means comprise, for each one of said covers (16), at least one elongated protrusion (38) which extends from the cover (16) in a longitudinal direction toward the inside of the tubular body (14) in a relationship of interference with the first circuit board (20) in order to engage the latter, while bending elastically, on a rear side thereof (20b) which is opposite from said at least one sensor (26), and to push it toward said tubular body (14).

8. The electronic device according to one of claims 5-7, **characterized in that** said presser means comprise at least one support (44) which is housed in said tubular body (14) and is shaped to push said first circuit board (20) toward the internal surface of said tubular body (14) in an intermediate position.

9. The electronic device according to claim 8, **characterized in that** said support (44) has a flat base (44a) which defines a seat adapted to engage a rear side (20b) of said first circuit board (20), and two arms (44b) which have an external profile that is complementary to the internal surface of said tubular body (14).

10. The electronic device according to claim 9, **characterized in that** said arms (44b) have respective elastically flexible terminal portions (44c), which are provided at their free ends with respective teeth (44d) which protrude outward, said terminal portions (44c) pressing elastically against the internal surface of the tubular body (14) via said teeth (44d), so as to push said support (44) against the first circuit board (20) and the latter, in turn, against said tubular body (14) via said spacer means (28, 30).

11. The electronic device according to claim 9 or 10, **characterized in that** said arms (44b) have respective mutually opposite contoured seats (44e) on their internal side, so as to define a receptacle for a battery (24) for supplying power to the electronic device.

12. The electronic device according to one of claims 1-11, **characterized in that** it comprises a second circuit board (22) which incorporates data transmission means for sending data acquired by said at least one sensor to an external control station.

13. The electronic device according to claims 9 and 12, **characterized in that** said arms (44b) have respective mutually opposite longitudinal grooves (44f) on their internal side, for supporting said second circuit board (22).

14. The electronic device according to one of claims 1-13, **characterized in that** it comprises at least a triad of sensors arranged side by side in a row.

## Patentansprüche

1. Eine elektronische Vorrichtung zur Messung des Füllstands eines Behälters, die Folgendes umfasst:
- ein Gehäuse (14, 16), das ausgebildet ist, um in einem Behälter (C) angebracht zu werden, und mindestens einen transparenten Abschnitt (14) hat,
- eine erste Leiterplatte (20), untergebracht in dem Gehäuse (14, 16) und ausgestattet mit mindestens einem Infrarotsensor (26) zur Füllstandsmessung, der einer Innenfläche des transparenten Abschnitts (14) zugewandt und mit einem Sender ausgestattet ist, welcher ausgebildet ist, um einen Lichtstrahl im Infrarotbereich auszusenden, und mit einem Empfänger, der ausgebildet ist, um den zurückkehrenden Lichtstrahl durch Reflexion auf dem vorne liegenden Gegenstand zu empfangen;
**dadurch gekennzeichnet, dass** sie weiter Folgendes umfasst:
- Pressmittel (38), die am Gehäuse verankert und ausgebildet sind, um die erste Leiterplatte (20) elastisch zu dem transparenten Abschnitt (14) hin zu schieben, und
- Abstandsmittel (28, 30), angeordnet zwischen der ersten Leiterplatte (20) und dem transparenten Abschnitt (14) und kalibriert, um den mindestens einen Sensor (26) ohne Kontakt in einem vordefinierten Abstand von dem transparenten Abschnitt (14) zu halten.

2. Die elektronische Vorrichtung gemäß Anspruch 1, **dadurch gekennzeichnet, dass** die Abstandsmittel (28) mindestens ein Abstandselement (30) mit einer flachen Seite (30a) umfassen, die ausgebildet ist, um an einer vorderen Fläche (20a) der ersten Leiterplatte (20) anzuliegen, an welcher der mindestens eine Sensor (26) montiert ist, und einer gegenüberliegenden Seite (30b), die ausgebildet ist, um intern an dem transparenten Abschnitt (14) anzuliegen, und ein Profil hat, das dazu komplementär ist.

3. Die elektronische Vorrichtung gemäß Anspruch 2, **dadurch gekennzeichnet, dass** das mindestens eine Abstandselement (30) mit einer Durchgangsöffnung (30c) ausgestattet ist, deren Abmessungen etwas größer sind als der Platzbedarf des mindestens einen Sensors (26), um darauf aufgesetzt zu werden, ohne damit in Kontakt zu kommen.

4. Die elektronische Vorrichtung gemäß Anspruch 2 oder 3, **dadurch gekennzeichnet, dass** das mindestens eine Abstandselement (30) mit einem Paar von Zentrierstiften (30d) versehen ist, die von seiner flachen Seite (30a) vorstehen und zum Zwecke der Zentrierung in entsprechende Löcher (32) eingeführt werden, die in der ersten Leiterplatte (20) angebracht sind.

5. Die elektronische Vorrichtung gemäß einem der Ansprüche 1-4, **dadurch gekennzeichnet, dass** der transparente Abschnitt des Gehäuses einen rohrförmigen Körper (14) umfasst, der an seinen zwei gegenüberliegenden Enden durch entsprechende Abdeckungen (16) verschlossen ist.

6. Die elektronische Vorrichtung gemäß Anspruch 5, **dadurch gekennzeichnet, dass** die Abdeckungen (16) mit dem rohrförmigen Körper (14) durch Ultraschall verschweißt sind.

7. Die elektronische Vorrichtung gemäß Anspruch 5 oder 6, **dadurch gekennzeichnet, dass** die Pressmittel für jede der Abdeckungen (16) mindestens einen lang gestreckten Vorsprung (38) umfassen, der sich von der Abdeckung (16) in eine Längsrichtung zur Innenseite des rohrförmigen Körpers (14) in eine Eingriffsbeziehung mit der ersten Leiterplatte (20) erstreckt, um, während er sich elastisch biegt, in Letztere, auf einer Rückseite davon (20b), die dem mindestens einen Sensor (26) gegenüberliegt, einzugreifen und sie zu dem rohrförmigen Körper (14) hin zu schieben.

8. Die elektronische Vorrichtung gemäß einem der Ansprüche 5-7, **dadurch gekennzeichnet, dass** die Pressmittel mindestens eine Halterung (44) umfassen, die in dem rohrförmigen Körper (14) untergebracht und geformt ist, um die erste Leiterplatte (20) zur inneren Oberfläche des rohrförmigen Körpers (14) hin in eine intermediäre Position zu schieben.

9. Die elektronische Vorrichtung gemäß Anspruch 8, **dadurch gekennzeichnet, dass** die Halterung (44) eine flache Basis (44a) hat, die einen Sitz bestimmt, der ausgebildet ist, um in eine Rückseite (20b) der ersten Leiterplatte (20) einzugreifen, und zwei Arme (44b), die ein Außenprofil haben, welches komplementär zu der Innenfläche des rohrförmigen Körpers (14) ist.

10. Die elektronische Vorrichtung gemäß Anspruch 9, **dadurch gekennzeichnet, dass** die Arme (44b) dazugehörige elastisch biegsame Endabschnitte (44c) haben, die an ihren freien Enden mit entsprechenden Zähnen (44d) versehen sind, welche auswärts ragen; wobei die Endabschnitte (44c) mit den Zähnen (44d) elastisch gegen die Innenfläche des rohrförmigen Körpers (14) drücken, um die Halterung (44) gegen die erste Leiterplatte (20) und diese wiederum über die Abstandsmittel (28, 30) gegen den rohrförmigen Körper (14) zu schieben.

11. Die elektronische Vorrichtung gemäß Anspruch 9 oder 10, **dadurch gekennzeichnet, dass** die Arme (44b) an ihrer Innenseite einander gegenüberliegende konturierte Sitze (44e) haben, um so eine Aufnahmevorrichtung für eine Batterie (24) zur Stromzufuhr an die elektronische Vorrichtung zu bestimmen.

12. Die elektronische Vorrichtung gemäß einem der Ansprüche 1-11, **dadurch gekennzeichnet, dass** sie eine zweite Leiterplatte (22) umfasst, welche Datenübertragungsmittel enthält, um Daten, die von dem mindestens einen Sensor erfasst werden, an eine externe Steuerungsstation zu senden.

13. Die elektronische Vorrichtung gemäß den Ansprüchen 9 und 12, **dadurch gekennzeichnet, dass** die Arme (44b) an ihrer Innenseite einander gegenüberliegende Längsnuten (44b) haben, um die zweite Leiterplatte (22) zu halten.

14. Die elektronische Vorrichtung gemäß einem der Ansprüche 1-13, **dadurch gekennzeichnet, dass** sie mindestens eine Dreiergruppe von Sensoren umfasst, die nebeneinander in einer Reihe angeordnet sind.

## Revendications

1. Dispositif électronique pour mesurer le niveau de remplissage d'un conteneur, comprenant :
- une coque (14, 16) adaptée pour être montée à l'intérieur d'un conteneur (C) et présentant au moins une partie transparente (14),
- une première carte de circuit imprimé (20) logée dans la coque (14, 16) et pourvue d'au moins un capteur infrarouge (26) pour mesurer le niveau de remplissage, qui fait face à une surface interne de ladite partie transparente (14) et est pourvue d'un émetteur adapté pour émettre un rayon lumineux dans le domaine de l'infrarouge, et d'un récepteur adapté pour recevoir le rayon lumineux de retour par réflexion sur l'objet en face,
**caractérisé par le fait qu'**il comprend en outre
- des moyens presseurs (38) ancrés à la coque et adaptés pour pousser élastiquement ladite première carte de circuit imprimé (20) vers ladite partie transparente (14), et
- des moyens d'espacement (28, 30) interposés entre ladite première carte de circuit imprimé (20) et ladite partie transparente (14) et calibrés pour maintenir ledit au moins un capteur (26) à une distance prédéfinie de ladite partie transparente (14) sans contact.

2. Dispositif électronique selon la revendication 1, **caractérisé par le fait que** lesdits moyens d'espacement (28) comprennent au moins un espaceur (30) avec une face plate (30a) adaptée pour venir en butée contre une surface avant (20a) de ladite première carte de circuit imprimé (20), sur laquelle ledit au moins un capteur (26) est monté, et une face opposée (30b) qui est adaptée pour venir en butée intérieure sur ladite partie transparente (14) et qui a un profil qui lui est complémentaire.

3. Dispositif électronique selon la revendication 2, **caractérisé par le fait que** ledit au moins un espaceur (30) est pourvu d'un trou traversant (30c) dont les dimensions sont légèrement supérieures à l'empreinte dudit au moins un capteur (26) afin de pouvoir être monté sur celui-ci sans entrer en contact avec lui.

4. Dispositif électronique selon la revendication 2 ou 3, **caractérisé par le fait que** ledit au moins un espaceur (30) est pourvu d'une paire de goupilles de centrage (30d) qui s'élèvent de sa face plate (30a) et sont insérées dans des trous (32) correspondants prévus dans ladite première carte de circuit imprimé (20) à des fins de centrage.

5. Dispositif électronique selon l'une quelconque des revendications 1 à 4, **caractérisé par le fait que** ladite partie transparente de la coque comprend un corps tubulaire (14), qui est fermé à ses deux extrémités opposées par des couvercles (16) respectifs.

6. Dispositif électronique selon la revendication 5, **caractérisé par le fait que** lesdits couvercles (16) sont soudés audit corps tubulaire (14) par ultrasons.

7. Dispositif électronique selon la revendication 5 ou 6, **caractérisé en ce que** lesdits moyens presseurs comprennent, pour chacun desdits couvercles (16), au moins une protubérance allongée (38) qui s'étend du couvercle (16) dans une direction longitudinale vers l'intérieur du corps tubulaire (14) dans une relation d'interférence avec la première carte de circuit imprimé (20) afin d'être en prise avec cette dernière, tout en se pliant élastiquement, sur un de ses côtés arrière (20b) qui est opposé audit au moins un capteur (26), et de la pousser vers ledit corps tubulaire (14).

8. Dispositif électronique selon l'une quelconque des revendications 5 à 7, **caractérisé par le fait que** lesdits moyens presseurs comprennent au moins un support (44) qui est logé dans ledit corps tubulaire (14) et est conçu pour pousser ladite première carte de circuit imprimé (20) vers la surface interne dudit corps tubulaire (14) dans une position intermédiaire.

9. Dispositif électronique selon la revendication 8, **caractérisé par le fait que** ledit support (44) présente une base plate (44a) qui définit un siège adapté pour être en prise avec un côté arrière (20b) de ladite première carte de circuit imprimé (20), et deux bras (44b) qui ont un profil externe qui est complémentaire à la surface interne dudit corps tubulaire (14).

10. Dispositif électronique selon la revendication 9, **caractérisé en ce que** lesdits bras (44b) ont des parties terminales (44c) respectives élastiquement flexibles, qui sont pourvues à leurs extrémités libres de dents (44d) respectives qui font saillie vers l'extérieur, lesdites parties terminales (44c) appuyant élastiquement contre la surface interne du corps tubulaire (14) par l'intermédiaire desdites dents (44d), de manière à pousser ledit support (44) contre la première carte de circuit imprimé (20) et cette dernière, à son tour, contre ledit corps tubulaire (14) par l'intermédiaire desdits moyens d'espacement (28, 30).

11. Dispositif électronique selon la revendication 9 ou 10, **caractérisé par le fait que** lesdits bras (44b) ont des sièges profilés (44e) respectifs mutuellement opposés sur leur côté interne, de manière à définir un réceptacle pour une batterie (24) destinée à alimenter le dispositif électronique en énergie.

12. Dispositif électronique selon l'une quelconque des revendications 1 à 11, **caractérisé par le fait qu'**il comprend une deuxième carte de circuit imprimé (22) qui incorpore des moyens de transmission de données pour envoyer les données acquises par ledit au moins un capteur à un poste de contrôle externe.

13. Dispositif électronique selon les revendications 9 et 12, **caractérisé par le fait que** lesdits bras (44b) ont des rainures longitudinales (44f) respectives mutuellement opposées sur leur côté interne, pour supporter ladite deuxième carte de circuit (22).

14. Dispositif électronique selon l'une quelconque des revendications 1 à 13, **caractérisé par le fait qu'**il comprend au moins une triade de capteurs disposés côte à côte dans une rangée.
